# EUROPÄISCHE PATENTSCHRIFT

(11) **EP 2 199 131 B1**
(45) Veröffentlichungstag und Bekanntmachung des Hinweises auf die Patenterteilung: **05.03.2014**
(21) Anmeldenummer: 09015404.8
(22) Anmeldetag: 12.12.2009
(51) Int. Cl.: B60J 7/20

(54) **Cabriolet-Fahrzeug mit einem heckseitigen Deckelteil**
Convertible vehicle with a rear cover
Véhicule cabriolet doté d'un couvercle arrière

(30) Priorität: 20.12.2008 DE 102008064256; 27.01.2009 DE 102009006243
(43) Veröffentlichungstag der Anmeldung: 23.06.2010
(73) Patentinhaber: Renault S.A.S., 92100 Boulogne-Billancourt (FR)
(72) Erfinder: Hilbk, Holger, 49201 Dissen (DE)
(74) Vertreter: Kronthaler, Schmidt & Coll.

(56) Entgegenhaltungen:
- EP-A1- 1 364 823
- WO-A1-2004/078505
- DE-A1- 10 339 273
- US-A1- 2004 155 480

## Beschreibung

Die Erfindung betrifft ein Cabriolet-Fahrzeug mit einem beweglichen heckseitigen Deckelteil, der in seiner Schließstellung einen Aufnahmeraum für ein geöffnetes Fahrzeugdach zumindest teilweise überdeckt und der zur Freigabe einer Durchtrittsöffnung für das Fahrzeugdach in einem von vorne nach hinten öffnenden Sinn bewegbar ist, nach dem Oberbegriff des Anspruchs 1.

Es ist bekannt, ein solches Cabriolet-Fahrzeuge mit einem festen hinteren Deckelteil zu versehen, der einen Raum abdeckt, der teilweise zur Aufnahme eines geöffneten Daches und teilweise als Kofferraum dient. Ein solcher Deckelteil kann zur Freigabe einer Durchtrittsöffnung für das Fahrzeugdach in einem von vorne nach hinten öffnenden Sinn bewegbar sein, wobei häufig der Deckelteil in diesem Öffnungssinn mit seinem rückseitigen unteren Kantenbereich in einem Schloss gehalten und um die Schlossachse schwenkbar ist. Dabei wird jedoch der Deckelteil nur aufgeschwenkt, so dass eine Heckwärtsverlagerung des Deckelteils insgesamt unterbleibt und der Deckelteil somit Gefahr läuft, in die hintere Stoßstange einzutauchen und mit dieser zu kollidieren.

Es ist daher weiter bekannt, für den genannten Öffnungssinn den Deckelteil ganz aus dem Schloss herauszuheben und bei seiner Heckwärtsverlagerung aufzuschwenken. Ein solcher Deckelteil umfasst üblicherweise einen ungefähr horizontalen vorderen Teil und einen aufrecht und mehr oder minder vertikal stehenden hinteren Heckteil, der in Schließstellung den Aufnahmeraum nach hinten abgrenzt. Während des Heraushebens aus dem Schloss wird ein solcher Deckelteil durch eine Bewegungsmechanik abgestützt, die an dem horizontalen vorderen Teil angreift, so dass der Heckteil frei herunter hängt. Aufgrund des Eigengewichts des Heckteils und der Elastizität im Deckelteil und/oder in dessen Bewegungsmechanik kann sich ein solcher Deckelteil im wesentlichen zwischen dem horizontalen Teil und dem aufrechten Heckteil leicht durchbiegen, so dass der Beginn der aushebenden Bewegung und die Endphase der schließenden Bewegung mit einer in Fahrtrichtung weisenden Vorwärtskomponente der hinteren unteren Kante verbunden ist, die dadurch eine zwischen Deckelteil und Karosserie gelegene Dichtung, die während der Bewegung eigentlich keine Funktion mehr hat, zwischen dem Deckelteil und der Karosserie entlangschleifen lässt, sie deformiert und deren Lebensdauer verringert.

Der Erfindung liegt das Problem zugrunde, hier eine Verbesserung zu erreichen.

Die Erfindung löst dieses Problem durch die Merkmale des Anspruchs 1. Hinsichtlich vorteilhafter Ausgestaltungen und Weiterbildungen der Erfindung wird auf die weiteren Ansprüche 2 bis 14 verwiesen.

Mit der Erfindung ist ein gattungsgemäßes Cabriolet-Fahrzeug gebildet, bei dem ein heckseitiger Deckelteil am Beginn der Öffnungsbewegung zur Freigabe der Durchtrittsöffnung für das Dach und am Ende der Schließbewegung aus dieser Öffnungsstellung heraus mit seinem rückseitigen unteren Kantenbereich entgegen seiner Verformungstendenz durch das Eigengewicht mit einer Komponente heckwärts abgewiesen wird und eine Entlastung und Verschleißminderung der Dichtung durch Verminderung der Reibung von Deckelteil zur Karosserie erreicht.

Der oder die Abweiser können aktiv Kraft einleiten oder insbesondere für eine konstruktiv einfache und im Betrieb zwangsweise zuverlässige Ausbildung durch passive Führungsbahn(en) gebildet sein.

Insbesondere können für eine symmetrische und glatt laufende Bewegung des Deckelteils zwei derart heckwärts abweisende Führungsbahnen beidseits einer Ladeöffnung für Gepäck im Heckbereich der Karosserie vorgesehen sein.

Dabei ist es günstig, wenn die Führungsbahn(en) bei geschlossenem Deckelteil von diesem übergriffen und von außen optisch verdeckt sind. Die zusätzlichen Führungsbahnen sind dann von außen nicht zu erkennen.

Um das Entlangreiben des Deckelteils an der Karosserie zu verhindern und dennoch einen glatten und stufenlosen Lauf des Deckelteils sicherzustellen, laufen günstig die Führungsbahnen schräg aufwärts und heckwärts.

Eine geringe Neigung der Führungsbahnen in einem Winkel von 5° bis 45° gegenüber der Vertikalen stellt vorteilhaft sicher, dass es zu keinem Abstoppen oder Verhaken im Lauf des Deckelteils kommt. Die Führungsbahnen müssen auch nicht geradlinig verlaufen, sondern können gekrümmt sein und in ihrer Steigung heckwärts über den Verlauf zunehmen.

Je nach Toleranz zwischen Deckelteil und Karosserie kann die Führungsbahn unterschiedlich lang sein. Günstig steht sei über eine Länge zwischen fünf und zwanzig Zentimetern in Kontakt mit einem Gegenstück des Deckelteils, so dass nur die kritische Phase der Bewegung im Nahbereich des geschlossenen Zustands von der Führungsbahn beaufschlagt ist und diese nicht weit nach hinten vorstehen muss.

Wenn am Deckelteil als Gegenstücke Roll- oder Gleitkörper zur Zusammenwirkung mit den Führungsbahnen angeordnet sind, sind eine Reibungsarmut und ein Vermeiden von Zusatzgeräuschen gewährleistet.

Dabei können sehr günstig die Roll- oder Gleitkörper innerhalb der Außenkontur des Deckelteils - und damit von außen unsichtbar - angeordnet sein, zum Beispiel an einer in Fahrzeuglängsrichtung erstreckten inneren Struktur des Deckelteils, wobei diese innere Struktur von einer äußeren Deckfläche übergriffen sein kann, die ungefähr in Fahrzeugquerrichtung erstreckt ist.

Weiterhin ist sehr günstig der Anpressdruck der Roll- oder Gleitkörper zum Ausgleich unterschiedlicher Toleranzen und auch für ein späteres Auswechseln oder Nachjustieren einstellbar, zum Beispiel durch deren Festlegung über Langlöcher.

Auch können die Roll- oder Gleitkörper zur Sicherung des idealen Anpressdrucks federgelagert sein.

Sofern die Führungsbahn(en) als separate Körper ausgebildet und lösbar an der Karosserie festlegbar ist oder sind, muss an der Karosserie keine Umkonstruktion erfolgen. Auch eine Nachrüstung an bestehenden Fahrzeugen ist problemlos möglich.

Zusätzlich kann der Deckelteil zur Freigabe einer Ladeöffnung für Gepäck in einem von hinten nach vorne öffnenden Sinn bewegbar sein und damit die bekannte Funktionsvielfalt von Deckelteilen ohne Einschränkungen übernehmen. Bei dieser zweiten Öffnungsmöglichkeit kann der Deckelteil um einen weiter vorne liegenden Drehpunkt aufschwenken und daher sofort bei beginnender Öffnung von der Karosserie hinreichend weit abheben, dass die Führungsbahnen hier nicht in Eingriff gelangen müssen.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt
- Fig. 1: ein erfindungsgemäßes Cabriolet-Fahrzeug in nach vorne abgebrochener Ansicht bei geschlossenem heckseitigem Deckelteil und angedeutetem geschlossenem Dach,
- Fig. 2: eine ähnliche Ansicht wie Fig. 1 bei beginnender Deckelteilöffnung im Freigabesinn für das Dach, hier ohne eingezeichnetes Dach,
- Fig. 3: eine ähnliche Ansicht wie Fig. 2 bei vollständiger Deckelteilöffnung zur Freigabe der Durchtrittsöffnung für das Dach,
- Fig. 4: eine gegensinnige Deckelteilöffnung zur Freigabe einer Ladeöffnung,
- Fig. 5 bis Fig. 10: den Heckbereich eines nicht erfindungsgemäß ausgebildeten Fahrzeuges während der schließenden Annäherung eines Heckdeckels an die Karosserie, darin

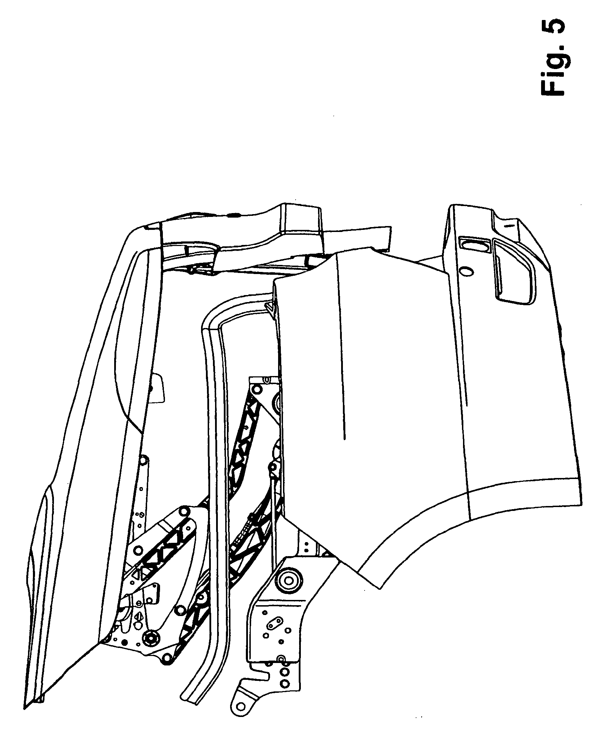

- Fig. 5: den Heckbereich eines Fahrzeuges während der Annäherung des Heckdeckels an die Karosserie,

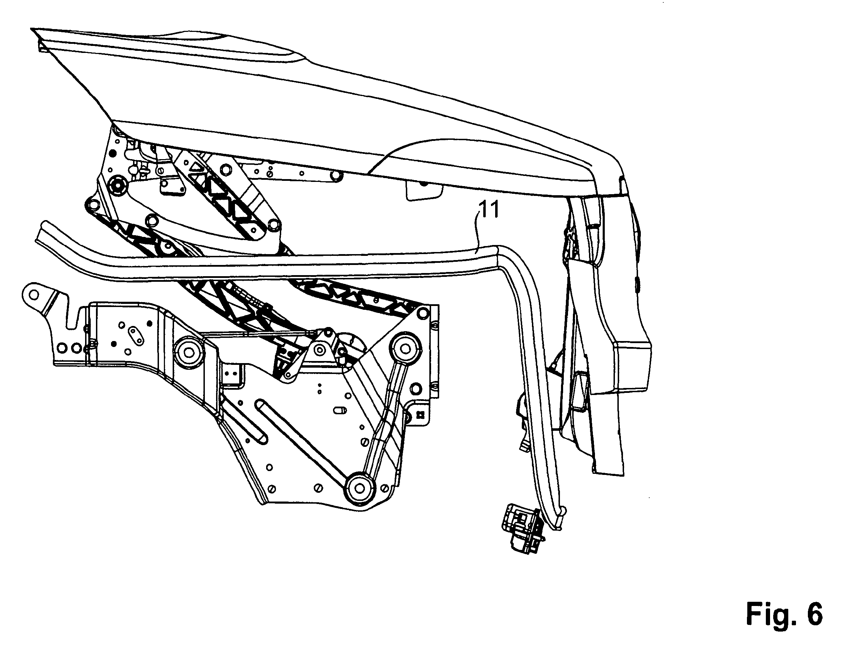

- Fig. 6: eine ähnliche Ansicht wie Fig. 5, jedoch ohne die äußeren Karosserieteile,

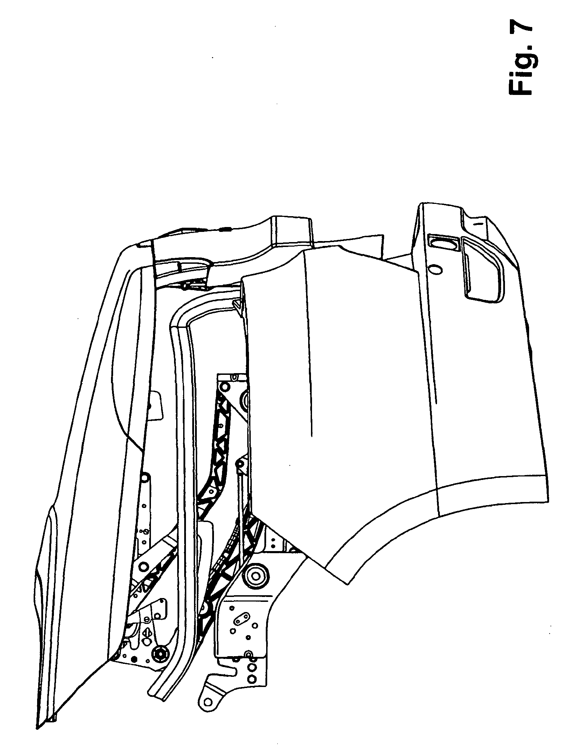

- Fig. 7: eine ähnliche Ansicht wie Fig. 5 bei weiter fortschreitender Annäherung des Deckelteils an die Karosserie,

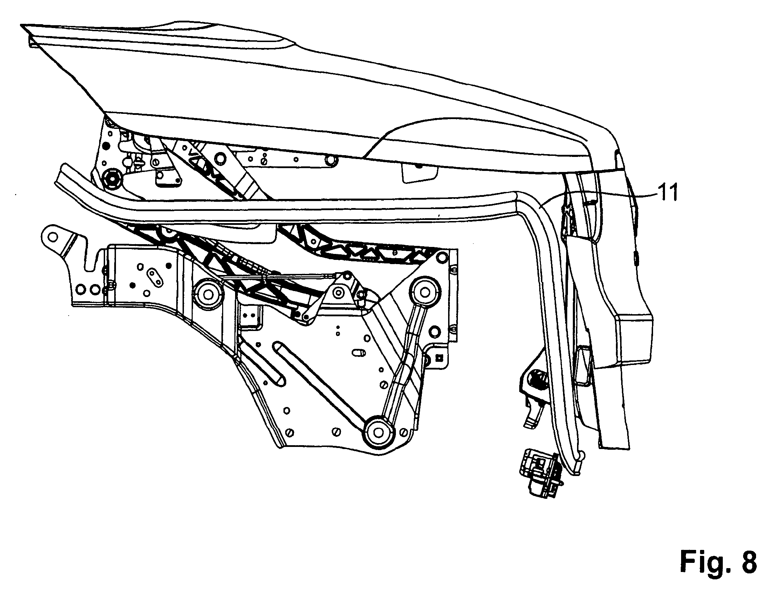

- Fig. 8: eine ähnliche Ansicht wie Fig. 7, jedoch ohne die äußeren Karosserieteile,

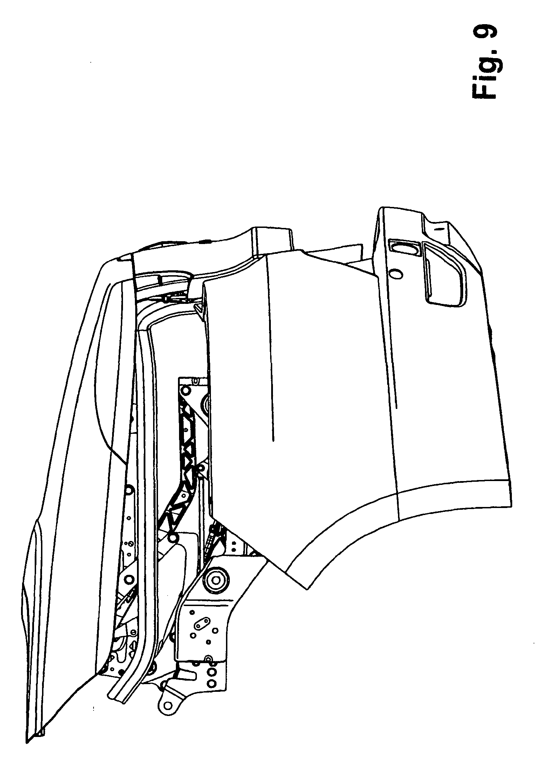

- Fig. 9: eine ähnliche Ansicht wie Fig. 7 bei weiter fortschreitender Annäherung des Deckelteils an die Karosserie bis dicht vor die Schließstellung,

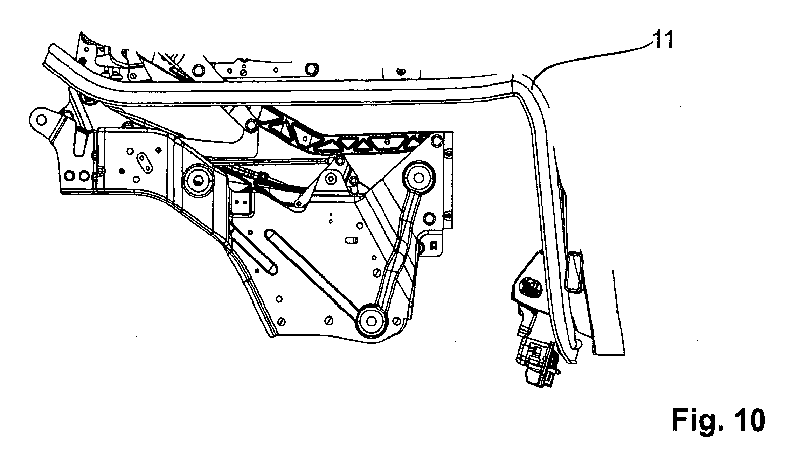

- Fig. 10: eine ähnliche Ansicht wie Fig. 9, jedoch ohne die äußeren Karosserieteile,

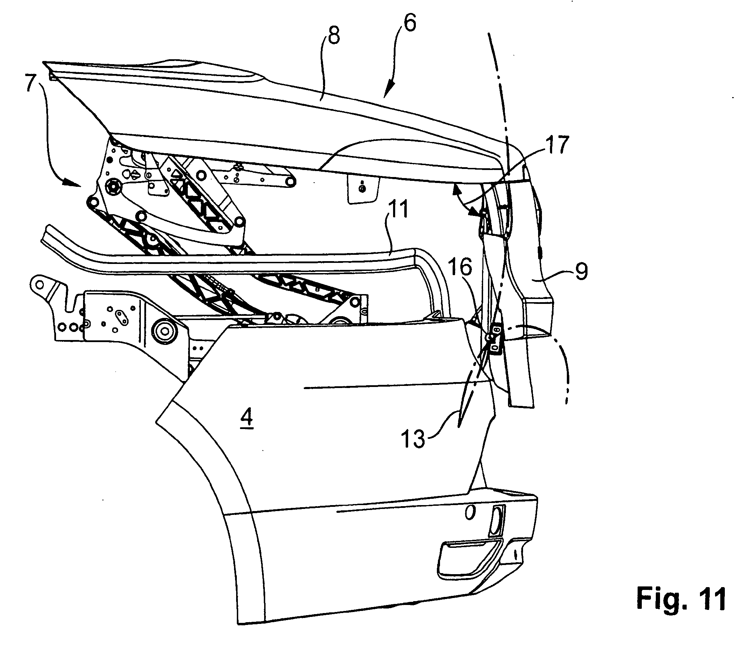

- Fig. 11 bis Fig. 16: den Heckbereich eines erfindungsgemäß ausgebildeten Fahrzeuges während der schließenden Annäherung eines Heckdeckels an die Karosserie, darin
- Fig. 11: den Heckbereich eines Fahrzeuges während der Annäherung des Heckdeckels an die Karosserie,

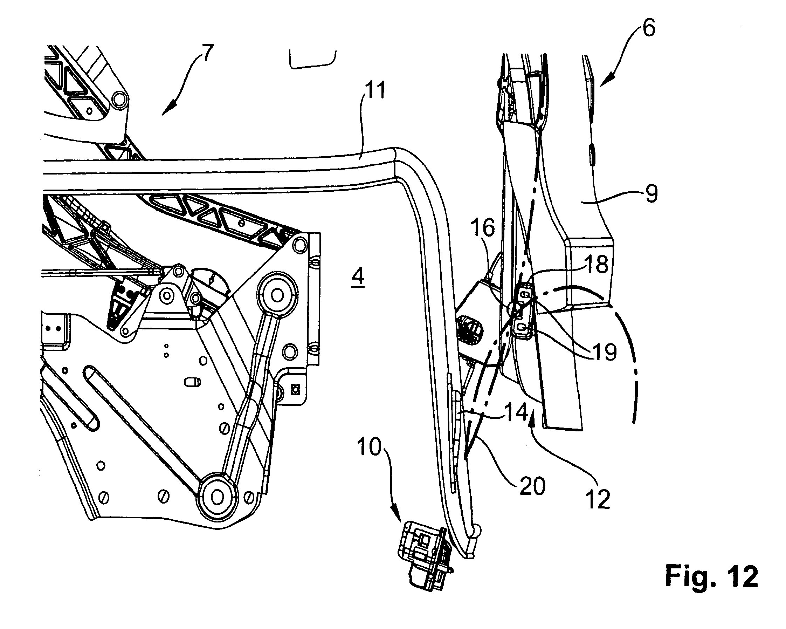

- Fig. 12: eine ähnliche Ansicht wie Fig. 11, jedoch ohne die äußeren Karosserieteile,

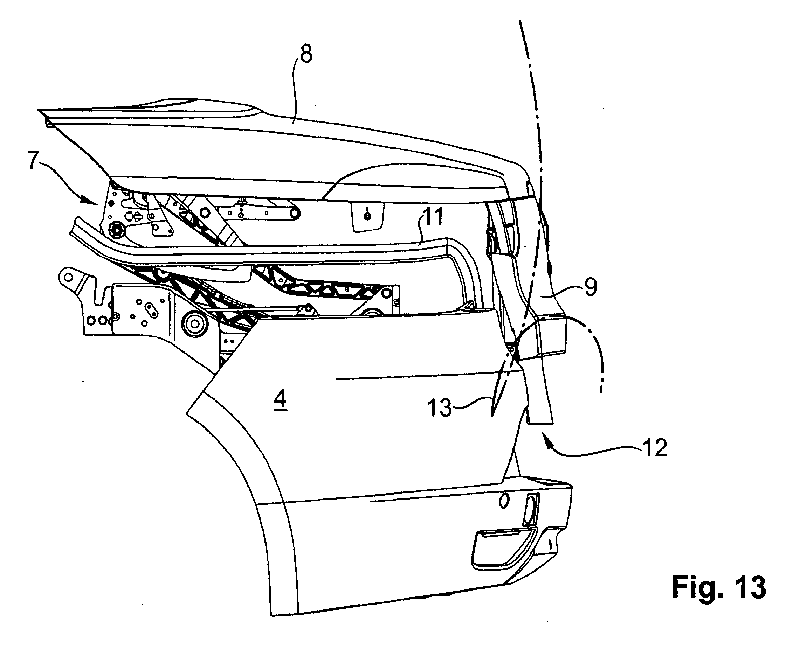

- Fig. 13: eine ähnliche Ansicht wie Fig. 11 bei weiter fortschreitender Annäherung des Deckelteils an die Karosserie,

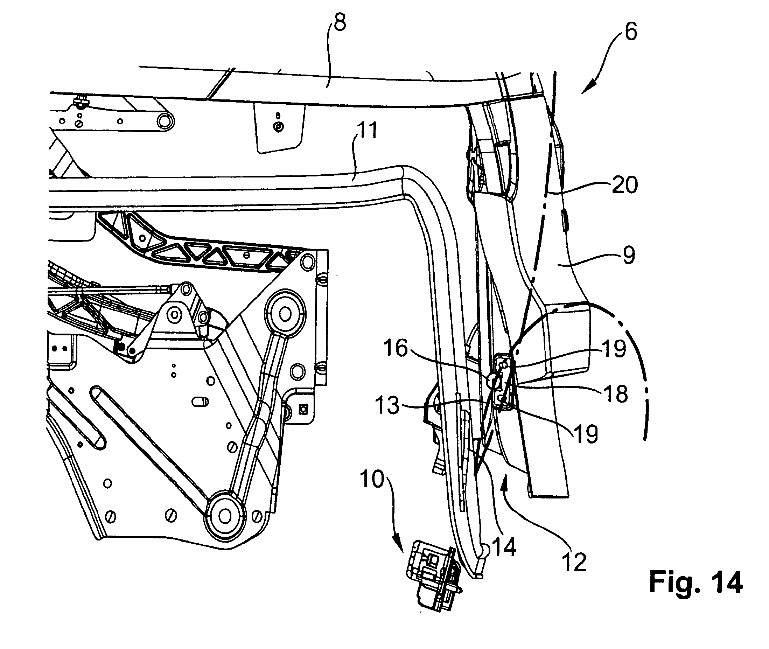

- Fig. 14: eine ähnliche Ansicht wie Fig. 13, jedoch ohne die äußeren Karosserieteile,

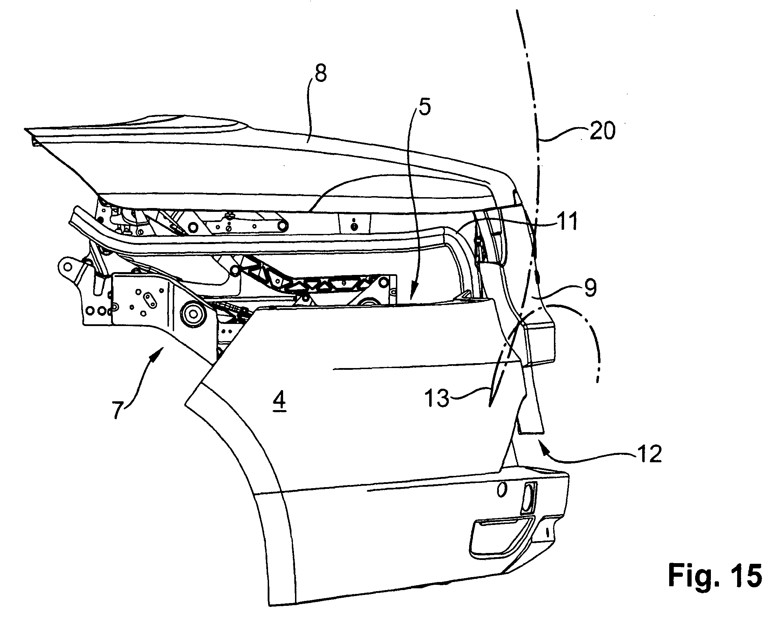

- Fig. 15: eine ähnliche Ansicht wie Fig. 13 bei weiter fortschreitender Annäherung des Deckelteils an die Karosserie,

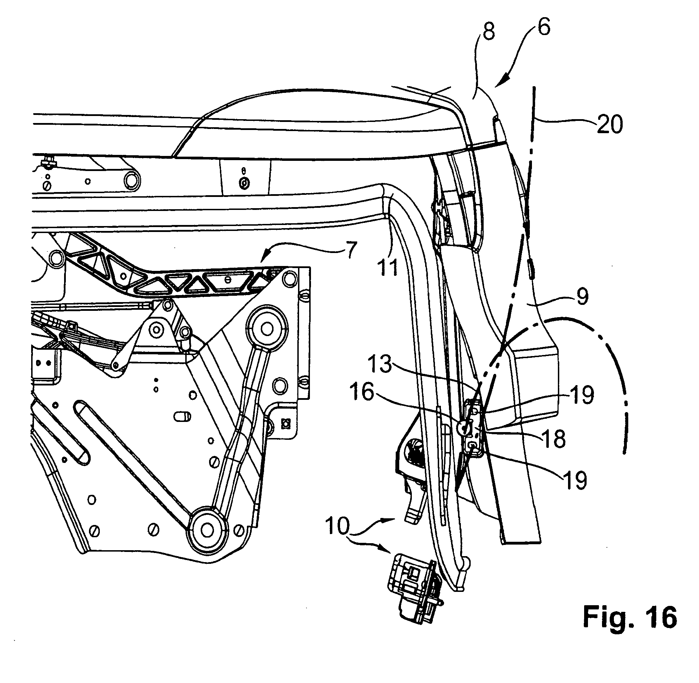

- Fig. 16: eine ähnliche Ansicht wie Fig. 15, jedoch ohne die äußeren Karosserieteile,

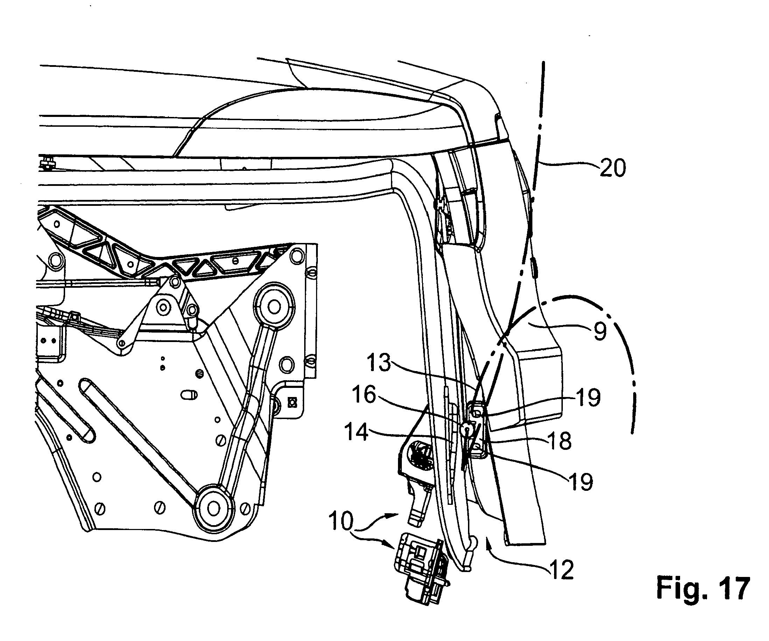

- Fig. 17: eine ähnliche Ansicht wie Fig. 16 bei weiter fortschreitender Annäherung des Deckelteils an die Karosserie,

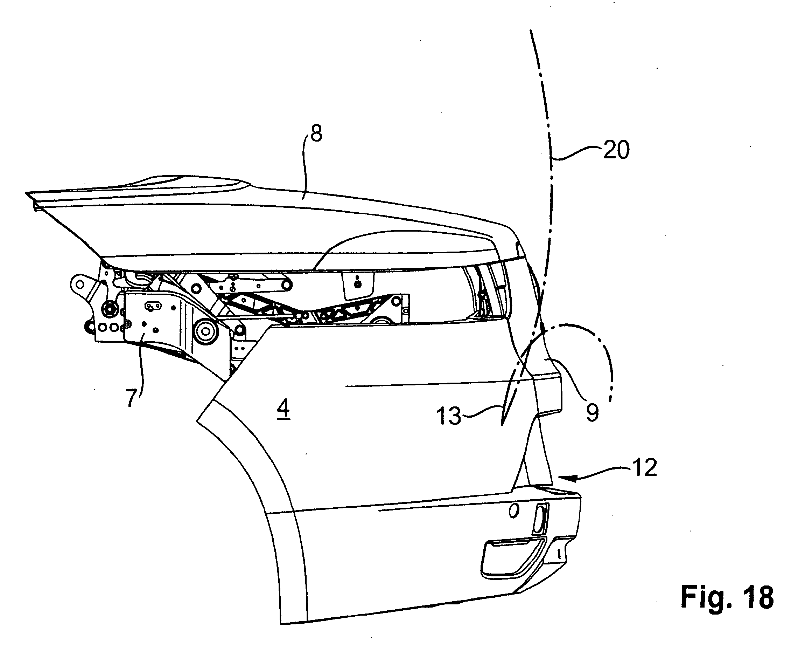

- Fig. 18: eine ähnliche Ansicht wie Fig. 15 bei weiter fortschreitender Annäherung des Deckelteils an die Karosserie,

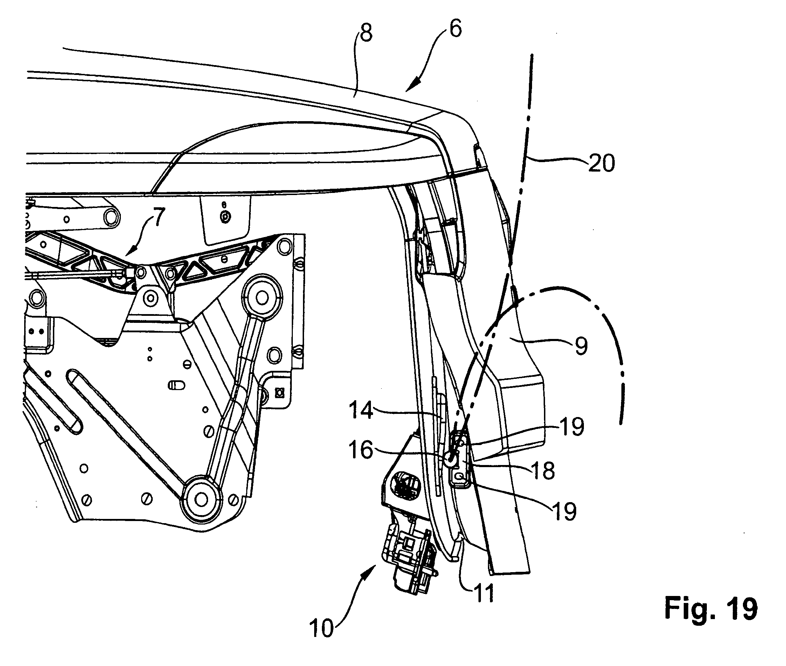

- Fig. 19: eine ähnliche Ansicht wie Fig. 18, jedoch ohne die äußeren Karosserieteile,

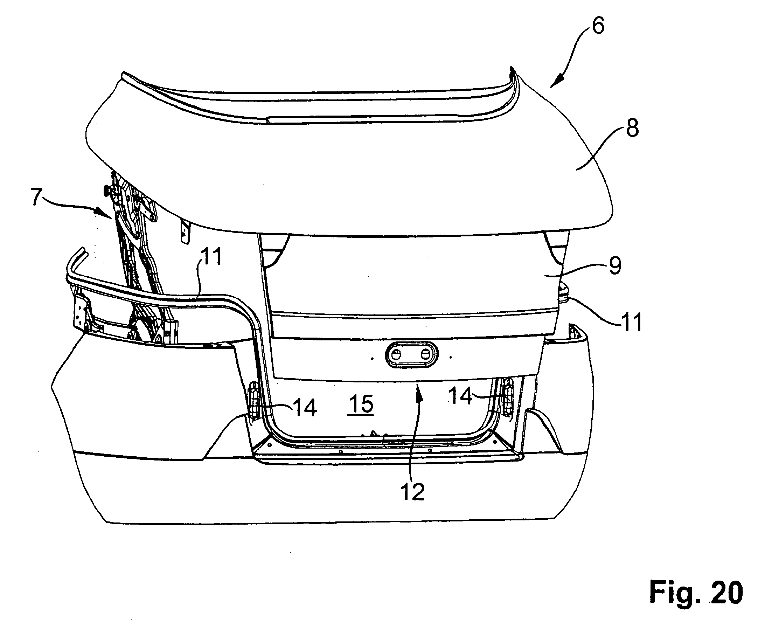

- Fig. 20: ein erfindungsgemäß ausgebildetes Fahrzeugheck mit separaten Führungsbahnen bei teilweise im o. g. Öffnungssinn geöffnetem Deckelteil in Ansicht von schräg hinten,

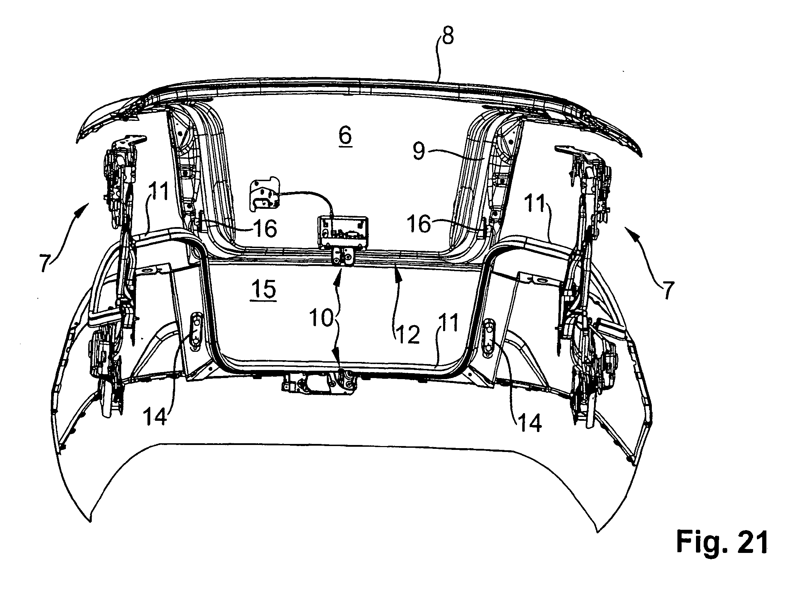

- Fig. 21: ein erfindungsgemäß ausgebildetes Fahrzeugheck mit der Karosserie integral zugeordneten Führungsbahnen in Ansicht von innen.

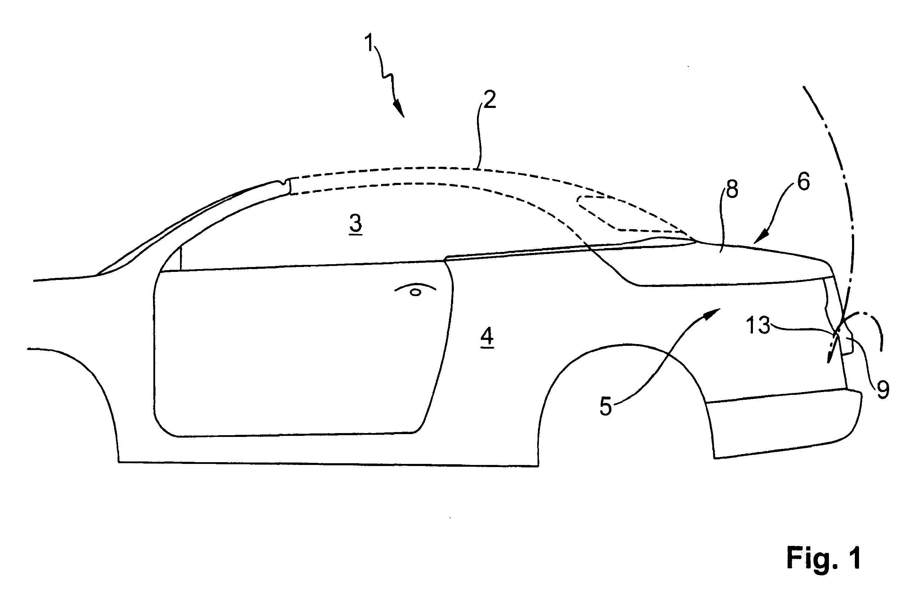

Ein erfindungsgemäß ausgebildetes Cabriolet-Fahrzeug 1 umfasst ein ganz oder teilweise bewegliches Dach 2 - in Figur 1 gestrichelt angedeutet -, das in Schließstellung einen Insassenraum 3 überdeckt, der für zwei oder für mehr Personen ausgelegt sein kann. Das Dach 2 kann insgesamt als ein sog. Softtop mit einem äußeren Dachbezug versehen oder insbesondere auch durch ein Retractable Hardtop (RHT) mit in sich starren Dachteilen gebildet sein. Die Dachlänge kann je nach Größe des Innenraums 3 variieren.

Das Dach 2 ist in eine Offenstellung beweglich, in der es im rückwärtigen Fahrzeugbereich und zumindest teilweise innerhalb der Karosserie 4 abgelegt ist. Hierfür ist gemäß dem gezeichneten Beispiel ein Aufnahmeraum 5 vorgesehen, der bei geschlossenem Dach 2 mit als Kofferraum dienen kann.

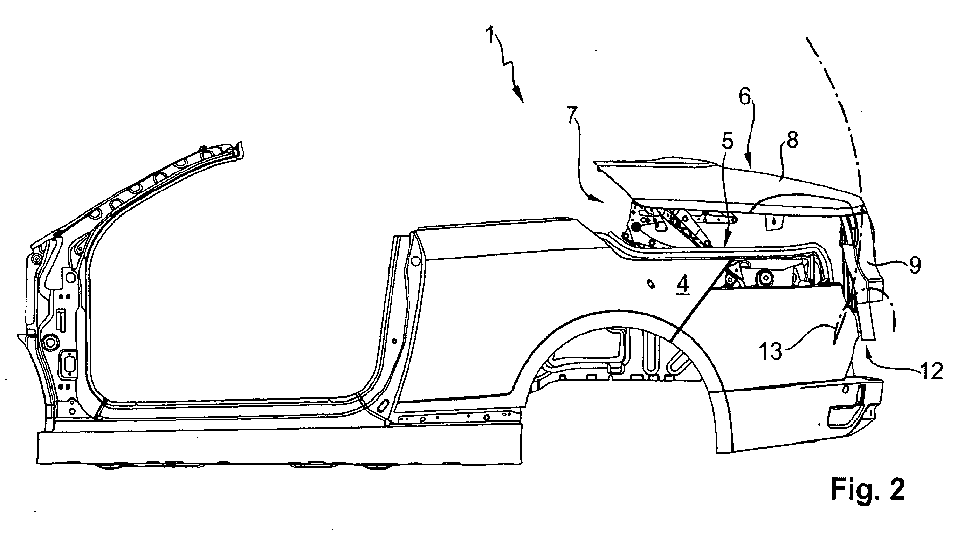

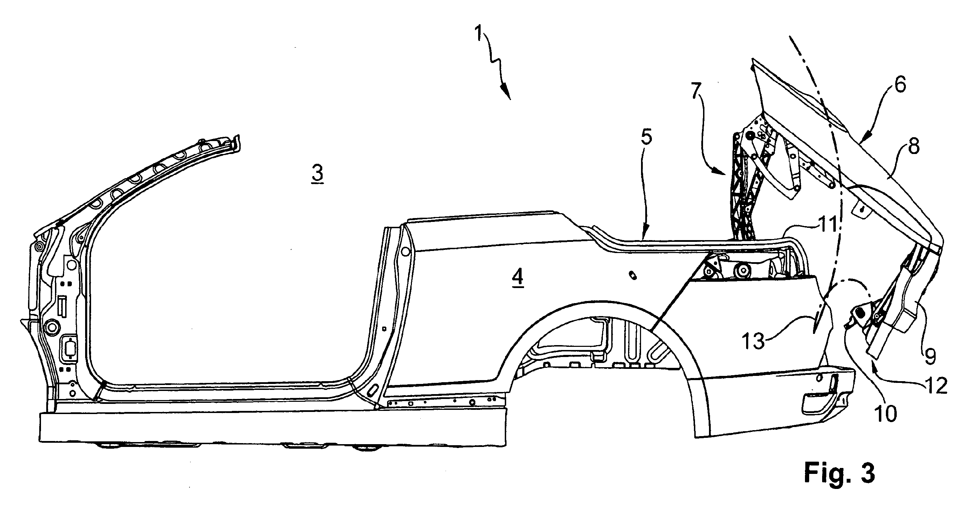

Der Aufnahmeraum 5 ist ganz oder teilweise von einem beweglichen heckseitigen Deckelteil 6 in dessen Schließstellung überdeckbar. Dieser Deckelteil 6 ist zumindest zur Freigabe einer Durchtrittsöffnung für das Fahrzeugdach 2 in einem von vorne nach hinten öffnenden Sinn bewegbar, wie zum Beispiel im Ablauf nach den Figuren 1 bis 3 dargelegt ist.

Für diese Öffnungsbewegung ist der ein- oder mehrstückige Deckelteil 6 über eine Mechanik 7, zum Beispiel eine Mehrgelenkmechanik, an der Karosserie 4 gehalten. Diese greift an einem ungefähr horizontalen vorderen Teil 8 des Deckelteils 6 an, gegenüber dem ein mehr oder minder vertikal stehender hinterer Heckteil 9, der in Schließstellung den Aufnahmeraum 5 nach hinten abgrenzt, angehängt ist. Zu Beginn der Öffnungsbewegung im genannten Öffnungssinn wird der Deckelteil 6 insgesamt aus einem heckseitigen Schloss 10 herausgehoben, so dass dann der Heckteil 9 frei und ohne Unterstützung unter Wirkung seines Eigengewichts hängt. Aufgrund dieses Eigengewichts des Heckteils 9 und der Elastizität im Deckelteil 6 und/oder in der Mechanik 7 kann sich ein solcher Deckelteil 6 im wesentlichen zwischen dem horizontalen Teil 8 und dem aufrechten Heckteil 9 leicht durchbiegen oder als gesamtes verformen. Diese elastische Biegebewegung ist in Figur 11 durch den Pfeil 17 angedeutet.

In den Figuren 5 bis 10 ist ein solches Durchbiegen für einen herkömmlichen Deckelteil zu Beginn der aushebenden Bewegung oder in der Endphase der schließenden Bewegung mit einer in Fahrtrichtung weisenden Vorwärtskomponente dargestellt. Die hintere untere Kante 12 kann dabei (Fig. 8) eine zwischen Deckelteil und Karosserie gelegene Dichtung 11, die während der Bewegung eigentlich keine Funktion mehr hat, durch Reibung deformieren oder anreißen und dabei deren Lebensdauer verringern.

### Hier setzt die Erfindung an:

In den Seitenansichten nach den Figuren 1 bis 3 ist die ideale Bahnkurve 13 für die hintere untere Kante 12 in diesem Öffnungssinn mit eingezeichnet. Daraus wird erkennbar, wie zu Beginn dieser Öffnungsbewegung nicht nur der vordere Bereich 8 des Deckelteils 6 aufwärts und heckwärts verlagerbar ist, sondern auch der rückseitige untere Kantenbereich 12 des Deckelteils 6 ebenfalls zunächst beinahe vertikal aufwärts bewegbar ist.

Um das in den Figuren 5 bis 10 dargestellte deformierende Entlangreiben an der Dichtung 11 zu vermeiden, ist für den rückseitigen unteren Kantenbereich 12 zumindest ein den Deckelteil 6 im hinteren unteren Kantenbereich 12 mit einer heckwärts wirkenden Bewegungskomponente beaufschlagender Abweiser 14 vorgesehen. Dieser kann ein aktiver, motorisch oder mit Federkraft beaufschlagter Aktuator sein oder für eine einfache und kostengünstige Ausbildung ein passives Element umfassen, hier eine mit einer heckwärtigen Komponente erstreckte Führungsbahn, wie in den Figuren dargestellt ist.

Wie zum Beispiel der Figur 20 zu entnehmen ist, können für eine über die Breite des Deckelteils 6 gleichmäßige Unterstützung symmetrisch zwei Führungsbahnen 14 beidseits einer Ladeöffnung 15 für Gepäck im Heckbereich der Karosserie 4 vorgesehen sein. Gemäß der dortigen Darstellung stellen die Führungsbahnen äußere Bestandteile von separat aufgebrachten Körpern, zum Beispiel aus Kunststoff, dar und sind lösbar an der Karosserie 4 festlegbar. Alternativ könnten die Führungsbahnen auch integral aus der Karosserie 4 ausgeformt sein, etwa durch Tiefziehen, wie in Figur 21 angedeutet ist.

In beiden Fällen sind die hier zwei Führungsbahnen optisch derart verdeckt, dass sie bei geschlossenem Deckelteil 6 von einer äußeren Abschlussblende des Heckteils 9 übergriffen und somit von außen optisch nicht sichtbar sind.

Die Führungsbahn(en) laufen zunächst in ihrem unteren Teil leicht schräg aufwärts und heckwärts - zunächst entsprechend der Ideallinie 13 für den genannten Öffnungssinn -, ehe sie im oberen Bereich weniger weit auswärts geneigt sind. Die Abwinklung gegenüber der Vertikalen liegt dabei typisch in einem Winkel von 5° bis 45°. Der obere Teil der Führungsbahn bildet auch einen Fangbereich für ein Gegenstück 16 des Deckelteils aus. Die gesamte Kontaktlänge der Führungsbahn zum Gegenstück 16 liegt typisch zwischen fünf und zwanzig Zentimetern.

Als Gegenstücke 16 können am Deckelteil 6 Roll- oder Gleitkörper zur Zusammenwirkung mit den Führungsbahnen angeordnet sein. Hier sind Rollen vorgesehen, die innerhalb der Außenkontur des Deckelteils 6 am Heckteil 9 des Deckelteils 6 angeordnet sind. In Figur 12 ist erkennbar, dass an jeder Seite des Heckteils 9 eine um eine Querachse bewegbare Rolle als Gegenstück 16 vorgesehen ist, die an einer Halteplatte 18 gelagert ist. Diese ist zur Verstellung des Anpressdruckes der Roll- oder Gleitkörper 16 mit einer Komponente in Fahrzeuglängsrichtung einstellbar, hier über Langlöcher 19. Zusätzlich oder alternativ können die Roll- oder Gleitkörper 16 auch federgelagert sein. In jedem Fall ist eine genaue Justage während der Montage des Deckelteils als Toleranzausgleich ermöglicht. Auch eine Nachstellung nach einer gewissen Alterung kann vorgenommen werden. Ebenso kann eine Höhenverstellung möglich sein, zum Beispiel indem die Langlöcher auch eine Übermaßerstreckung in Vertikalrichtung aufweisen. Ebenso können die Abweiser 14 eine Verstellmöglichkeit, zum Beispiel in Vertikalrichtung, aufweisen.

Die Führungsbahnen können relativ breit gegenüber relativ schmalen Gegenstücken 16 ausgebreitet sein, um damit eine Justage in Fahrzeugquerrichtung entbehrlich zu machen und über einen weiten Bereich sicherstellen zu können, dass die Gegenstücke 16 auf die Abweiser 14 treffen.

Eine Nachrüstung der Gegenstücke 16 an bestehende Fahrzeuge ist möglich. Wenn die Abweiser 14 als separate Körper vorgesehen sind, können diese ebenfalls an bestehenden Fahrzeugen nachgerüstet werden. Dabei ist eine Zuordnung der Abweiser 14 sowohl zu einem als Stoßstange dienenden Kunststoffteil der Karosserie 4 als auch zu einem Stahl- oder Aluminiumheckbereich möglich.

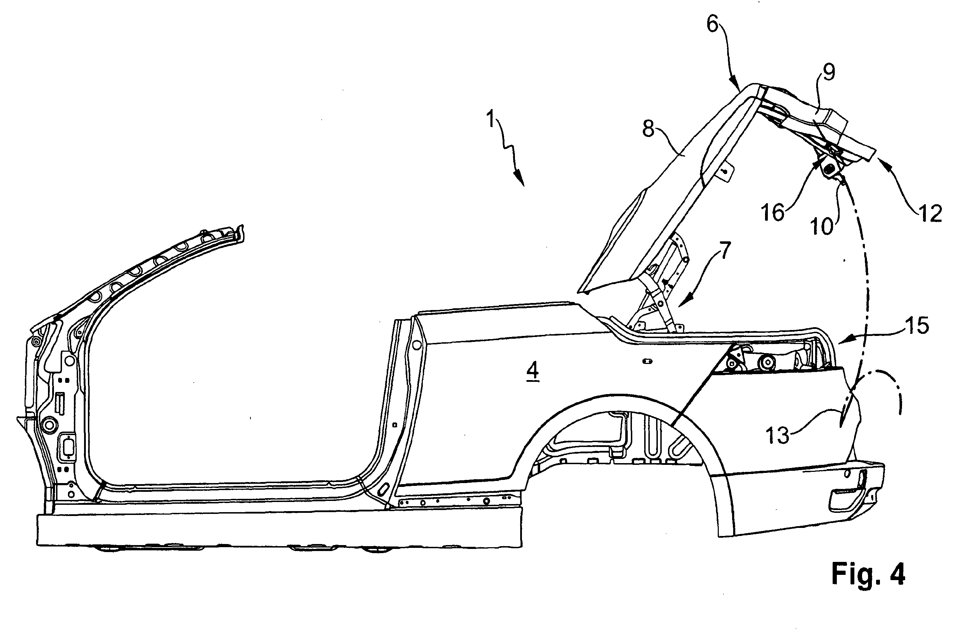

Wie in Figur 4 erkennbar ist, kann hier der Deckelteil 6 auch gegensinnig zur Freigabe der Ladeöffnung 15 für Gepäck in einem von hinten nach vorne öffnenden Sinn bewegt werden. Die dabei von den Gegenstücken 16 überstrichene Bahnkurve 20 liegt im Nahbereich der geschlossenen Stellung bezüglich der Fahrzeuglängsrichtung hinter der Bahnkurve 13 des anderen Öffnungssinns. In der Bewegung nach Fig. 4 ist daher der Deckelteil 6 zur Freigabe der Ladeöffnung 15 für Gepäck kontaktfrei zu der oder den Führungsbahn(en) bewegbar. Diese brauchen daher bei diesem Bewegungssinn keine Wirkung zu entfalten.

Es versteht sich, dass die Anordnung von Abweiser 14 und Gegenstück 16 zwischen Karosserie 4 und Deckelteil 6 auch in prinzipiell gleichwertiger Weise ausgetauscht werden kann.

## Patentansprüche

1. Cabriolet-Fahrzeug (1) mit einem beweglichen heckseitigen Deckelteil (6), der in seiner Schließstellung einen Aufnahmeraum (5) für ein geöffnetes Fahrzeugdach (2) zumindest teilweise überdeckt und der zur Freigabe einer Durchtrittsöffnung für das Fahrzeugdach (2) in einem von vorne nach hinten öffnenden Sinn bewegbar ist,
wobei das Deckelteil (6) einen ungefähr horizontalen vorderen Teil (8) und einen mehr oder minder vertikal stehenden hinteren Heckteil (9) aufweist,
und wobei zumindest zu Beginn dieser Öffnungsbewegung ein vorderer Bereich des Deckelteils (6) aufwärts und heckwärts verlagerbar ist und ein rückseitiger unterer Kantenbereich (12) des Deckelteils (6) dabei ebenfalls aufwärts bewegbar ist und an dem horizontalen vorderen Teil (8) eine Bewegungsmechanik (7) angreift,
so dass der Heckteil (9) frei herunter hängt und das Deckelteil (6) sich aufgrund des Eigengewichts des Heckteils (9) und der Elastizität im Deckelteil (6) und/oder in dessen Bewegungsmechanik (7) im Wesentlichen zwischen dem horizontalen Teil (8) und dem aufrechten Heckteil (9) leicht durchbiegen kann,
**dadurch gekennzeichnet,**
**dass** zumindest ein den Deckelteil (6) im hinteren unteren Kantenbereich (12) mit einer heckwärts wirkenden Bewegungskomponente beaufschlagender Abweiser (14) vorgesehen ist, wobei die Bewegungskomponente entgegen einer Verformungstendenz des Deckelteils (6) durch sein Eigengewicht wirkt.

2. Cabriolet-Fahrzeug (1) nach Anspruch 1,
**dadurch gekennzeichnet,**
**dass** der oder jeder Abweiser (14) eine mit einer heckwärtigen Komponente erstreckte Führungsbahn ausbildet.

3. Cabriolet-Fahrzeug (1) nach Anspruch 2,
**dadurch gekennzeichnet,**
**dass** zwei Führungsbahnen beidseits einer Ladeöffnung (15) für Gepäck im Heckbereich der Karosserie (4) vorgesehen sind.

4. Cabriolet-Fahrzeug (1) nach einem der Ansprüche 2 oder 3,
**dadurch gekennzeichnet,**
**dass** die Führungsbahn(en) bei geschlossenem Deckelteil (6) von diesem übergriffen und von außen optisch verdeckt ist oder sind.

5. Cabriolet-Fahrzeug (1) nach einem der Ansprüche 2 bis 4,
**dadurch gekennzeichnet,**
**dass** die Führungsbahn(en) schräg aufwärts und heckwärts verlaufen.

6. Cabriolet-Fahrzeug (1) nach einem der Ansprüche 2 bis 5,
**dadurch gekennzeichnet,**
**dass**.die Führungsbahnen zumindest über einen Teil ihres Verlaufs in einem Winkel von 5° bis 45° gegenüber der Vertikalen geneigt sind.

7. Cabriolet-Fahrzeug (1) nach einem der Ansprüche 2 bis 6,
**dadurch gekennzeichnet,**
**dass** die Führungsbahnen eine Länge zwischen fünf und zwanzig Zentimetern aufweisen, in der sie in Kontakt mit zumindest einem Gegenstück (16) des Deckelteils (6) stehen.

8. Cabriolet-Fährzeug (1) nach einem der Ansprüche 2 bis 7,
**dadurch gekennzeichnet,**
**dass** am Deckelteil (6) als Gegenstücke (16) Roll- oder Gleitkörper zur Zusammenwirkung mit den Führungsbahnen angeordnet sind.

9. Cabriolet-Fahrzeug (1) nach Anspruch 8,
**dadurch gekennzeichnet,**
**dass** Roll- oder Gleitkörper (16) innerhalb der Außenkontur des Deckelteils (6) angeordnet sind.

10. Cabriolet-Fahrzeug (1) nach einem der Ansprüche 8 oder 9,
**dadurch gekennzeichnet,**
**dass** der Anpressdruck der Roll- oder Gleitkörper (16) einstellbar ist.

11. Cabriolet-Fahrzeug (1) nach einem der Ansprüche 8 bis 10,
**dadurch gekennzeichnet,**
**dass** die Roll- oder Gleitkörper (16) federgelagert sind.

12. Cabriolet-Fahrzeug (1) nach einem der Ansprüche 2 bis 11,
**dadurch gekennzeichnet,**
**dass** die Führungsbahn(en) an separaten Körpern ausgebildet und diese lösbar an der Karosserie (4) festlegbar sind.

13. Cabriolet-Fahrzeug (1) nach Anspruch 12,
**dadurch gekennzeichnet,**
**dass** der Deckelteil (6) zur Freigabe einer Ladeöffnung (15) für Gepäck in einem von hinten nach vorne öffnenden Sinn bewegbar ist.

14. Cabriolet-Fahrzeug (1) nach Anspruch 13,
**dadurch gekennzeichnet,**
**dass** der Deckelteil (6) zur Freigabe der Ladeöffnung (15) für Gepäck kontaktfrei zu der oder den Führungsbahn(en) bewegbar ist.

## Claims

1. A convertible vehicle (1) comprising a moveable rear lid part (6) which, in its closed position, covers a stowage compartment (5) for an opened vehicle roof (2) at least partly and can be moved in a direction opening from the front to the rear to uncover a passage opening for the vehicle roof (2),
wherein said lid part (6) comprises an approximately horizontal front part (8) and a more or less vertically upright rear part (9),
and wherein a front portion of the lid part (6) can be displaced upward and to the rear, at least at the beginning of said opening movement, and in doing so, a rear lower edge portion (12) of the lid part (6) can also be moved upward and a displacement mechanism (7) acts on the horizontal front part (8),
so that the rear part (9) hangs down freely and the lid part (6), due to the inherent weight of the rear part (9) and the elasticity in the lid part (6) and/or in its displacement mechanism (7), can sag slightly, essentially between the horizontal part (8) and the upright rear part (9), **characterised in that**
at least one deflector (14) is provided to apply a rearward-acting component of movement to the rear lower edge portion (12) of the lid part (6), said component of movement counteracting a tendency of the lid part (6) to deform under its own weight.

2. The convertible vehicle (1) according to claim 1, **characterised in that** the or each deflector (14) forms a guideway extending with a rearward component.

3. The convertible vehicle (1) according to claim 2, **characterised in that** two guideways are provided on both sides of a loading opening (15) for luggage at the rear of the vehicle body (4).

4. The convertible vehicle (1) according to any one of claims 2 or 3, **characterised in that** the guideway(s) is/are covered and optically concealed from the outside by the lid part (6) when the latter is closed.

5. The convertible vehicle (1) according to any one of claims 2 to 4, **characterised in that** the guideway(s) extend(s) obliquely upward and to the rear.

6. The convertible vehicle (1) according to any one of claims 2 to 5, **characterised in that** the guideways are inclined, at least over part of their extent, at an angle of 5° to 45° to the vertical.

7. The convertible vehicle (1) according to any one of claims 2 to 6, **characterised in that** the guideways have a length of between five and twenty centimetres over which they are in contact with at least one counter element (16) of the lid part (6).

8. The convertible vehicle (1) according to any one of claims 2 to 7, **characterised in that** rolling or sliding elements are provided as counter elements (16) on the lid part (6) to cooperate with the guideways.

9. The convertible vehicle (1) according to claim 8, **characterised in that** rolling or sliding elements (16) are arranged within the outer contour of the lid part (6).

10. The convertible vehicle (1) according to any one of claims 8 or 9, **characterised in that** the contact pressure of the rolling or sliding elements (16) is adjustable.

11. The convertible vehicle (1) according to any one of claims 8 to 10, **characterised in that** the rolling or sliding elements (16) are spring-supported.

12. The convertible vehicle (1) according to any one of claims 2 to 11, **characterised in that** the guideway(s) is/are formed on separate elements which can be fixed to the vehicle body (4) in a releasable manner.

13. The convertible vehicle (1) according to claim 12, **characterised in that** the lid part (6) can be moved in a direction opening from the rear to the front to uncover a loading opening (15) for luggage.

14. The convertible vehicle (1) according to claim 13, **characterised in that** the lid part (6) can be moved to uncover the loading opening (15) for luggage without contacting the guideway(s).

## Revendications

1. Véhicule cabriolet (1) comportant un couvercle arrière déplaçable (6) qui, dans sa position fermée, couvre au moins partiellement un compartiment de rangement (5) pour un toit de véhicule (2) ouvert et est déplaçable dans un sens d'ouverture de l'avant vers l'arrière pour découvrir une ouverture de passage pour ledit toit de véhicule (2),
dans lequel ledit couvercle (6) comporte une partie avant (8) approximativement horizontale et une partie arrière (9) debout plus ou moins vertical,
et dans lequel une région avant du couvercle (6) est déplaçable vers le haut et vers l'arrière, au moins au début dudit mouvement d'ouverture, et en même temps, une région de bord arrière et inférieure (12) du couvercle (6) est également déplaçable vers le haut et un mécanisme de déplacement (7) agit sur ladite partie avant horizontale (8),
de sorte que ladite partie arrière (9) pende librement et le couvercle (6), à cause du poids propre de la partie arrière (9) et de l'élasticité dans le couvercle (6) et/ou dans son mécanisme de déplacement (7), puisse fléchir un peu, sensiblement entre la partie horizontale (8) et la partie arrière debout (9),
**caractérisé en ce que**
l'on prévoit au moins un déflecteur (14) soumettant le couvercle (6), dans sa région de bord arrière et inférieure (12), à un composant de mouvement agissant vers l'arrière, ledit composant de mouvement opposant une tendance de déformation du couvercle (6) par son propre poids.

2. Véhicule cabriolet (1) selon la revendication 1, **caractérisé en ce que** le ou chaque déflecteur (14) constitue un guidage s'étendant avec un composant dirigé vers l'arrière.

3. Véhicule cabriolet (1) selon la revendication 2, **caractérisé en ce que** l'on prévoit deux guidages des deux côtés d'une ouverture de chargement de bagages (15) à l'arrière de la carrosserie (4).

4. Véhicule cabriolet (1) selon l'une quelconque des revendications 2 ou 3, **caractérisé en ce que** le(s) guidage(s) est/sont couvert(s) et masqué(s) optiquement de l'extérieur par le couvercle (6) lorsque celui-ci est fermé.

5. Véhicule cabriolet (1) selon l'une quelconque des revendications 2 à 4, **caractérisé en ce que** le(s) guidage(s) s'étend(ent) vers le haut d'une façon oblique et vers l'arrière.

6. Véhicule cabriolet (1) selon l'une quelconque des revendications 2 à 5, **caractérisé en ce que** les guidages sont inclinés, au moins sur une partie de leur extension, par un angle de 5° à 45° par rapport à la verticale.

7. Véhicule cabriolet (1) selon l'une quelconque des revendications 2 à 6, **caractérisé en ce que** les guidages présentent une longueur comprise entre cinq et vingt centimètres sur laquelle ils sont en contact avec au moins une contre-pièce (16) du couvercle (6).

8. Véhicule cabriolet (1) selon l'une quelconque des revendications 2 à 7, **caractérisé en ce que** l'on prévoit sur le couvercle (6) des organes de roulement ou de glissement en tant que contre-pièces (16) destinées à coopérer avec les guidages.

9. Véhicule cabriolet (1) selon la revendication 8, **caractérisé en ce que** les organes de roulement ou de glissement (16) sont disposées dans le contour extérieur du couvercle (6).

10. Véhicule cabriolet (1) selon l'une quelconque des revendications 8 ou 9, **caractérisé en ce que** la pression de contact des organes de roulement ou de glissement (16) est réglable.

11. Véhicule cabriolet (1) selon l'une quelconque des revendications 8 à 10, **caractérisé en ce que** les organes de roulement ou de glissement (16) sont montées sur des ressorts.

12. Véhicule cabriolet (1) selon l'une quelconque des revendications 2 à 11, **caractérisé en ce que** le(s) guidage(s) est/sont réalisé(s) sur des organes séparées qui peuvent être fixées à la carrosserie (4) de manière amovible.

13. Véhicule cabriolet (1) selon la revendication 12, **caractérisé en ce que** le couvercle (6) est déplaçable dans une sens d'ouverture de l'arrière vers l'avant afin de découvrir une ouverture de chargement de bagages (15).

14. Véhicule cabriolet (1) selon la revendication 13, **caractérisé en ce que** le couvercle (6) est déplaçable pour découvrir une ouverture de chargement de bagages (15) sans être en contact avec le(s) guidage(s).
